# EUROPEAN PATENT APPLICATION

(11) **EP 4 667 351 A1**
(43) Date of publication of application: **24.12.2025**
(21) Application number: 24382669.0
(22) Date of filing: 20.06.2024
(51) Int. Cl.: B64C 1/06, B64C 1/18, B64D 37/04, B64D 37/30

(54) **AN AIRCRAFT FUSELAGE SECTION**

(71) Applicant: Airbus Operations, S.L.U., 28906 Getafe (Madrid) (ES)
(72) Inventor: INIESTA LOZANO, Fernando, E-28906 Getafe, Madrid (ES); ESCOBAR BENAVIDES, Francisco, E-28906 Getafe, Madrid (ES)
(74) Representative: ABG Intellectual Property Law, S.L.

(57) **Abstract**

The present invention belongs to the technical field of aircraft fuselage structure. Particularly, the present invention provides an aircraft fuselage section with improved crashworthiness energy absorption.

## Description

### TECHNICAL FIELD OF THE INVENTION

The present invention belongs to the technical field of aircraft fuselage structure. Particularly, the present invention provides an aircraft fuselage section with improved crashworthiness energy absorption.

### BACKGROUND OF THE INVENTION

In the aeronautical field, dynamic and safety are key parameters for an aircraft. In particular, the enhancement of crashworthiness in aircraft fuselage structures stands as a primary objective. The fuselage serves as a primary protective enclosure, tasked with safeguarding passengers, crew, and valuable cargo during emergency scenarios, including but not limited to emergency landings and collisions. Despite notable advancements in the aeronautic field, the pursuit of optimal crashworthiness capabilities remains a persistent challenge, requiring innovative solutions with respect to the state of the art of typical fuselage sections structure.

Traditional fuselage designs often exhibit deficiencies in their ability to dissipate or absorb kinetic energy during impact events, thereby increasing the likelihood of structural failure and compromising occupant safety. Additionally, inherent limitations in the configurations of aircraft interiors and seating arrangements may impact efforts to optimize occupant survivability and mitigate injury risks in crash scenarios.

Furthermore, the selection and utilization of materials in fuselage structures significantly influence crashworthiness characteristics, including energy absorption, deformation behavior, and structural integrity. While advanced materials such as composites offer favorable strength-to-weight ratios, their performance under impact conditions may vary, requiring particular consideration and optimization for crashworthiness applications.

Moreover, the pursuit of enhanced crashworthiness often entails complicated trade-offs between cost, weight, and performance parameters. Structural reinforcements and safety features intended to enhance crashworthiness may introduce complexities and weight penalties, necessitating a comprehensive approach to fuselage design optimization.

Additionally, the efficacy of emergency evacuation procedures and the facilitation of rescue operations following a crash event are contingent upon the design features of the fuselage, including emergency exits, access points, and structural robustness.

Focusing on the potential implementation of liquid hydrogen in civil aviation, a main challenge will be the crashworthiness consideration of the overall aircraft and, more particularly, of the fuel tank or the area where the fuel tank is located with respect to the fuselage structure. In those cases, the aircraft should be able to ensure a safe operation in case of emergency landing, wheels up landing, and fuselage crash survivability.

Currently, crashworthiness is key in aircraft design. In eventual plane accidents, it is essential to protect the elements responsible for fuel storage in the aircraft as much as possible. Thus, there is a need in the art for an optimized crashworthiness concept which may increase survivability of the components of the fuselage structure and main tanks, additional tanks or passenger cabin.

### SUMMARY OF THE INVENTION

The present invention provides an aircraft fuselage section according to claim 1 and an aircraft according to claim 14. Advantageous embodiments are defined in the dependent claims.

In a first inventive aspect, the invention provides an aircraft fuselage section extending along a longitudinal direction, the aircraft fuselage section comprising at least one structural frame and further comprising at least one additional frame;
wherein each additional frame is attached to a corresponding structural frame by means of at least two attaching means;
wherein the additional frame and the corresponding structural frame are arranged at a same position according to the longitudinal direction;
wherein the additional frame and the corresponding structural frame are configured for defining a gap therebetween;
wherein the gap extends in a plane perpendicular to the longitudinal direction; and
wherein the structural frame and/or the corresponding additional frame is/are configured to deform during a crash event.

The present invention provides an optimised aircraft fuselage section with enhanced crash-worthiness capacities, in particular, regarding energy absorption. The aircraft fuselage section of the invention comprises at least one structural frame and further comprises at least one additional frame. By adding at least one additional frame with respect to the at least one structural frame, the invention helps smoothing load transfer to the main fuselage structure arrangement in a crash event.

Also, the object of the invention brings a solution to be implemented on a fuselage structure for energy absorption in emergency-landing conditions and crash resistance in a severe but survivable impact. Furthermore, it provides a way to optimise fuselage structure providing increased survivability of the components placed within the structural frame such as additional tanks, main tanks or passenger cabin.

In particular, the present invention focuses on the energy absorption, dissipation and distribution along the fuselage structure in case of emergency, for example, in a crash event.

All the above mentioned advantages of the present invention are achieved by means of the at least one additional frame being attached to a corresponding structural frame by means of two attaching means.

In an embodiment, an aircraft fuselage structure having a plurality of structural frames distributed along a longitudinal direction X also has a plurality of additional frames. In an embodiment, the number of additional frames is equal to the number of structural frames. In these embodiment, each structural frame has one corresponding additional frame.

In an embodiment, the additional frame and the corresponding structural frame are arranged within a same plane perpendicular to the longitudinal direction.

Each additional frame and each corresponding structural frame are configured for defining a gap therebetween and said gap also extends in a plane perpendicular to the longitudinal direction.

Furthermore, according to the invention, the structural frame and/or the corresponding additional frame is/are configured to deform during a crash event.

In an embodiment, the at least one structural frame is configured to deform during a crash event.

In an embodiment, the at least one additional frame is configured to deform during a crash event.

In an embodiment, both the structural frame and the corresponding additional frame are configured to deform during a crash event.

Advantageously, the deformation of the structural frame and/or the corresponding additional frame is supported by the gap located therebetween. In particular, the deformation of the structural frame and/or the corresponding additional frame during a crash event impacts the gap formed therebetween and the volume of said gap is heavily reduced during/after the crash event with respect to its initial volume before the crash event.

The structural frame of an aircraft refers to the underlying framework that supports the entire aircraft's weight and withstands the various stresses encountered during flight. The structural frame of an aircraft is substantially circular around a center which, in the case of the present invention, corresponds with a point of the longitudinal axis X.

The additional frame is established along a portion of the periphery of the substantially circular structural frame.

In an embodiment, the additional frame is substantially shaped as an arc of circumference.

In an embodiment, the additional frame is substantially shaped as an arc of ellipse.

In an embodiment, the frame located outermost the aircraft fuselage section is configured to deform during a crash event.

Advantageously, the frame located outermost, which is the structural frame in an embodiment or the additional frame in another embodiment, is able to deform during a crash event and, by allowing deformation, the frame located outermost the aircraft fuselage section is the one reducing the distance corresponding to the gap between the two frames during a crash event. The distance between the two frames, namely the structural frame and the corresponding additional frame, is determined by the gap defined therebetween.

In an embodiment, the aircraft fuselage section further comprises crash absorption means arranged between the structural frame and the additional frame.

That is, the crash absorption means are arranged within the gap defined between the structural frame and the corresponding additional frame.

In an embodiment, the crash absorption means extend through the whole gap from one frame to the corresponding other frame, that is from the structural frame until the additional frame or from the additional frame until the structural frame.

In an embodiment, the crash absorption means extend through a portion of the gap, that is from the structural frame towards the additional frame or from the additional frame towards the structural frame.

In an embodiment, the crash absorption means are arranged along the longitudinal direction.

In an embodiment, the aircraft fuselage section comprises a plurality of pairs of frames distributed along the longitudinal direction X, each pair of frames comprising one structural frame and one additional frame.

In an embodiment, the crash absorption means are arranged along the longitudinal direction X in a continuous manner within the gaps of two or more successive pairs of frames and also extending in the space between successive pairs of frames.

In an embodiment, the crash absorption means are arranged along the longitudinal direction in a continuous manner.

In an embodiment, the crash absorption means are distributed along the longitudinal direction in a discontinuous manner, that is, crash absorption means are arranged in portions of the gap extending along the longitudinal direction.

In an embodiment, the crash absorption means comprise rod-posts, truss, corrugated metal sheets and/or lattice-work.

In an embodiment where the crash absorption means are corrugated metal sheets, said crash absorption means extends:
- along the plane perpendicular to the longitudinal direction , or
- along both the plane perpendicular to the longitudinal direction and the longitudinal direction.

In an embodiment, the additional frame is arranged outwardly with respect to the structural frame.

In this embodiment, the additional frame is the frame located outermost the aircraft fuselage section. Thus, the additional frame is the one which will deform the most during a crash event with respect to the structural frame since the additional frame will be the frame which will enter first in contact with an external element. In other words, the additional frame is the frame which provides additional load paths and that helps decelerating and dissipating energy by deforming itself.

The term "outermost" in the context of an aircraft, aircraft section or aircraft fuselage section in this document refers to the elements or structures located farthest from the center of the aircraft. In essence, a frame located outermost the aircraft, aircraft section or aircraft fuselage section is the frame that is situated at the farthest periphery. The term "outwardly" refers to the position of an element with respect to another, in particular, when the first element is located farther than the second element with respect to the center of the aircraft fuselage section.

In an embodiment, where crash absorption means are arranged within the gap, the combination of the deformability of the additional frame together with the presence of the crash absorption means enhances crashworthiness capacities of the overall aircraft fuselage section of the invention.

In an embodiment, the additional frame is arranged inwardly with respect to the structural frame.

In this embodiment, the structural frame is the frame located outermost the aircraft fuselage section. Thus, the structural frame is the one which will deform the most during a crash event with respect to the additional frame since the structural frame will be the frame which will enter first in contact with an external element. In other words, the structural frame is the frame which provides additional load paths and that helps decelerating and dissipating energy by deforming itself.

The term "inwardly" refers to the position of an element with respect to another, in particular, when the first element is located closer than the second element with respect to the center of the aircraft fuselage section.

In an embodiment, where crash absorption means are arranged within the gap, the combination of the deformability of the structural frame together with the presence of the crash absorption means enhances the crashworthiness capacities of the overall aircraft fuselage section of the invention.

In an embodiment, the aircraft fuselage section further comprises a floor connected to the innermost frame.

Advantageously, the floor helps spreading the load due to the crash event and it helps avoiding damages and puncture when the floor contacts with the upper component(s) located within the aircraft fuselage structure.

In an embodiment, the innermost frame is the structural frame and the floor is connected to said structural frame.

In an embodiment, the innermost frame is the additional frame and the floor is connected to said additional frame.

In an embodiment, the floor is curved.

Advantageously, in this embodiment the floor is curved in order to match the shape of the upper components located within the aircraft fuselage structure such as a cylindrical fuel tank.

In an embodiment, the floor comprises two external layers and a filling layer arranged between the two external layers.

In an embodiment, the external layers comprise carbon fibre or glass fibre. In an embodiment, the external layers are made of carbon fibre or made of glass fibre.

In a particular embodiment, each external layer is made of a plurality of carbon fibre layers or a plurality of glass fibre layers.

In an embodiment, the external layers comprise aluminium.

In an embodiment, the filling layer comprises foam. In a particular embodiment, the filling layer is made of high performance polymethacrylimide (PMI).

In an embodiment, the attaching means are configured for:
- allowing deformation of the additional frame with respect to the structural frame in the plane perpendicular to the longitudinal direction, and/or
- allowing rotation of the additional frame with respect to the structural frame, or
- fixing the additional frame to the structural frame so that the additional frame has zero degree of freedom with respect to the structural frame.

In an embodiment, the attaching means allow deformation of the additional frame with respect to the structural frame and they additionally help in the deformation of the frame located outermost the aircraft fuselage section while maintaining the load path of the other frame and providing additional absorption and deceleration of the energy received during a crash event. Additionally or alternatively, in an embodiment the attaching means allow some degree of rotation of the portion of the additional frame connected to the structural frame by means of said attaching means.

In an embodiment where the attaching means allow rotation around the longitudinal axis X, said attaching means comprise elastic means that provide opposing torque in the event of deformation of the additional and/or the structural frame and, in particular, that provide opposing torque around said longitudinal axis X so that elastic resistance is enhanced with respect to said deformation.

In particular, this type of attaching means enhances energy absorption and deceleration of the kinetic energy with respect to the overall aircraft fuselage structure until the attaching means collapses after impact in the crash event.

In an embodiment, the attaching means are located on opposite sides of the structural frame.

In an embodiment, the aircraft fuselage section further comprises at least one fuel storage tank, wherein, in operative mode, the at least one fuel storage tank is arranged over one or more of the at least one additional frame.

In particular, the operative mode is when the aircraft fuselage section is part of an aircraft and the aircraft is positioned on the ground or in straight cruise flight. In such operative mode, the additional frame is oriented towards the lower part of the structural frame. Therefore, in those embodiments where the aircraft fuselage section comprises crash absorption means, the crash absorption means are also located in the lower part of the aircraft fuselage section which is the optimal positioning of said crash absorption means in order to provide enhanced crash-worthiness capabilities of the overall aircraft fuselage structure of the invention.

Advantageously, the present invention helps enhancing energy absorption caused by a crash event and permits an optimized protection of the at least one fuel storage tank located over the structural and additional frames disposition of the present invention.

In an embodiment, crash absorption means are distributed along the aircraft fuselage section in order to cover the length of the at least one fuel storage tank.

In an embodiment, crash absorption means are located in a portion or in several portions along the aircraft fuselage section in order to cover only part of the length of the at least one fuel storage tank.

In a second inventive aspect, the present invention provides an aircraft comprising an aircraft fuselage section according to any embodiment of the first inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figure 1: This figure shows a schematic representation of a longitudinal section view of an aircraft fuselage section according to an embodiment of the invention.
- Figure 2: This figure shows a schematic representation of an aircraft fuselage section according to an embodiment of the invention.
- Figure 3: This figure shows a schematic representation of a cross-sectional view of a floor implemented in an aircraft fuselage section according to an embodiment of the invention.
- Figure 4: This figure shows a schematic representation of two embodiments of the crash absorption means.
- Figures 5A-5B: These figures show a schematic representation of an embodiment of the crash absorption means.
- Figure 6: This figure shows a schematic representation of an aircraft comprising an aircraft fuselage section according to an embodiment of the invention.

### DETAILED DESCRIPTION OF THE INVENTION

Once the object of the invention has been outlined, specific non-limitative embodiments are described hereinafter.

The present invention provides an aircraft fuselage section (1) extending along a longitudinal direction (X), the aircraft fuselage section (1) comprising at least one structural frame (2) and further comprising at least one additional frame (3);
wherein each additional frame (3) is attached to a corresponding structural frame (2) by means of at least two attaching means (4.1, 4.2);
wherein the additional frame (3) and the corresponding structural frame (2) are arranged at a same position according to the longitudinal direction (X);
wherein the additional frame (3) and the corresponding structural frame (2) are configured for defining a gap therebetween;
wherein the gap extends in a plane (YZ) perpendicular to the longitudinal direction (X); and
wherein the structural frame (2) and/or the corresponding additional frame (3) is/are configured to deform during a crash event.

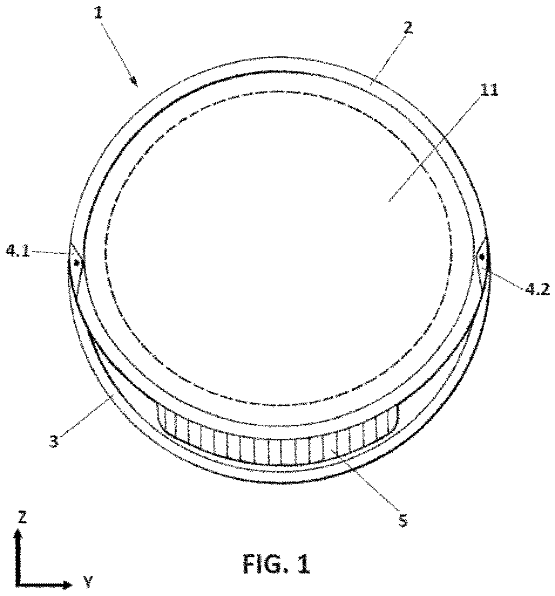

Figure 1 shows a schematic representation of a longitudinal section view of an aircraft fuselage section (1) according to an embodiment of the invention. In particular, in this embodiment, the aircraft fuselage section (1) has one structural frame (2), one corresponding additional frame (3), attaching means (4.1, 4.2) located on opposite sides of the structural frame (2) and crash absorption means (5) arranged between the structural frame (2) and the additional frame (3).

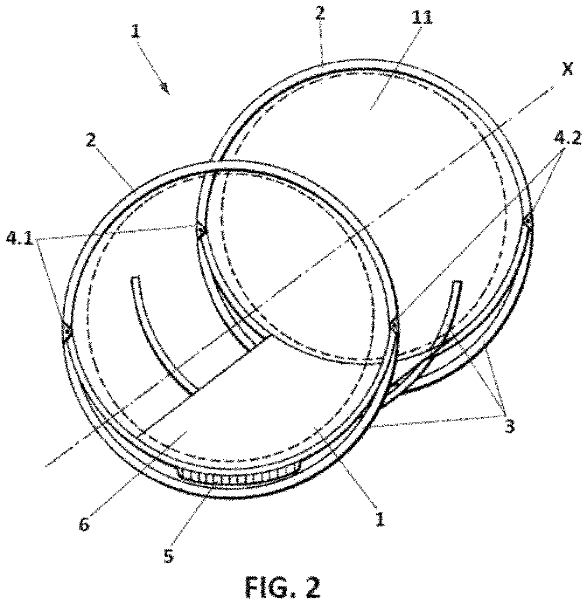

In an embodiment, the frame located outermost the aircraft fuselage section (1) is configured to deform during a crash event. In the particular embodiment shown in figure 1, the frame located outermost the aircraft fuselage section (1) is the additional frame (3). In the particular embodiment of figure 2, the frame located outermost the aircraft fuselage section (1) is the structural frame (2).

That is, in the embodiment of figure 1, the additional frame (3) is arranged outwardly with respect to the structural frame (2). On the contrary, in the embodiment of figure 2, the additional frame (3) is arranged inwardly with respect to the structural frame (2).

As shown in figure 1 and also in figure 2, in these embodiments the aircraft fuselage section (1) comprises crash absorption means (5) arranged between the structural frame (2) and the additional frame (3). Also, the crash absorption means (5) are arranged along the longitudinal direction (X).

In an embodiment, the crash absorption means (5) are arranged within the gap defined between the structural frame (2) and the corresponding additional frame (3). The crash absorption means (5) are arranged along the longitudinal direction X but also extend along a direction perpendicular with respect to the longitudinal direction X.

In an embodiment, the crash absorption means (5) extend through the whole gap from one frame (2, 3) to the corresponding other frame (3, 2), that is from the structural frame (2) until the additional frame (3) or from the additional frame (3) until the structural frame (2).

In an embodiment, the crash absorption means (5) extend through a portion of the gap, that is from the structural frame (2) towards the additional frame (3) or from the additional frame (3) towards the structural frame (2).

In an embodiment, the crash absorption means (5) are arranged along the longitudinal direction X in a continuous manner.

In an embodiment, the aircraft fuselage section (1) comprises a plurality of pairs of frames distributed along the longitudinal direction X, each pair of frames comprising one structural frame and one additional frame. In an embodiment, the crash absorption means (5) are arranged along the longitudinal direction X in a continuous manner within the gaps of two or more successive pairs of frames and also extending in the space between successive pairs of frames.

In an embodiment, the crash absorption means (5) are distributed along the longitudinal direction X in a discontinuous manner, that is, crash absorption means (5) are arranged in the gaps of two or more pairs of frames without extending in the space between successive pairs of frames.

In an embodiment, the crash absorption means (5) comprise rod-posts, truss, corrugated metal sheets and/or lattice-work.

In an embodiment, the crash absorption means (5) are corrugated metal sheets arranged within the gap between the structural frame (2) and the additional frame (3).

In an embodiment, the attaching means (4.1, 4.2) are configured for allowing deformation of the additional frame (3) with respect to the structural frame (2) in any of the embodiments of the invention, that is in either the embodiment where the additional frame (3) is the outermost frame or in the embodiment where the additional frame (3) is the innermost frame. Additionally or alternatively, in an embodiment, the attaching means (4.1, 4.2) are configured for allowing rotation of the additional frame (3) with respect to the structural frame, or for fixing the additional frame (3) to the structural frame (2) so that the additional frame (3) has zero degree of freedom with respect to the structural frame (2).

In the embodiment of figure 2, the innermost frame is the additional frame (3). In this embodiment, a floor (6) is connected to the innermost frame (3). In other embodiments, as the one shown in figure 1, the innermost frame is the structural frame (2) and the floor (6) is connected to the structural frame (2).

In an embodiment, the floor (6) is curved.

As shown in figures 1 and 2, in an embodiment the aircraft fuselage section (1) includes a fuel storage tank (11), wherein, in operative mode, the at least one fuel storage tank (11) is arranged over one or more of the at least one additional frame (3).

In an embodiment, the fuel storage tank (11) is arranged over the floor (6) which is connected to the additional frame (3), as shown in figure 2, or over the floor (6) connected to the structural frame (2), as shown in figure 1.

In an embodiment, the crash absorption means (5) are distributed along the aircraft fuselage section (1) in order to cover the length of the at least one fuel storage tank (11).

In an embodiment, the crash absorption means (5) are located in a portion or in several portions along the aircraft fuselage section (1) in order to cover only part of the length of the at least one fuel storage tank (11).

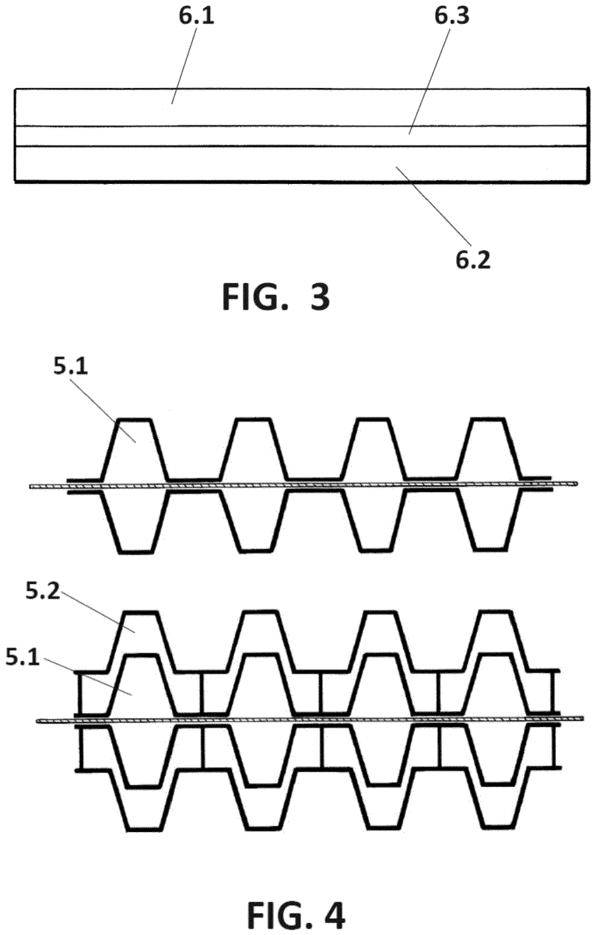

In an embodiment, as shown in figure 3, the floor (6) comprises two external layers (6.1, 6.2) and a filling layer (6.3) arranged between the two external layers (6.1, 6.2).

In an embodiment, the external layers (6.1, 6.2) comprise carbon fibre or glass fibre. In an embodiment, the external layers (6.1, 6.2) are made of carbon fibre or made of glass fibre.

In a particular embodiment, each external layer (6.1, 6.2) is made of a plurality of carbon fibre layers or a plurality of glass fibre layers.

In an embodiment, the external layers (6.1, 6.2) comprise aluminium.

In an embodiment, the filling layer (6.3) comprises foam. In a particular embodiment, the filling layer (6.3) is made of high performance polymethacrylimide (PMI).

Figure 4 depicts two embodiments of the crash absorption means (5) wherein said crash absorption means (5) are corrugated metal sheets. In the embodiment shown at the top of figure 4, the corrugated metal sheets comprise only one layer, namely a first layer (5.1). In the embodiment shown at the bottom of figure 4, the corrugated metal sheets comprise two layers (5.1, 5.2), where a second layer (5.2) encompasses the first layer (5.1).

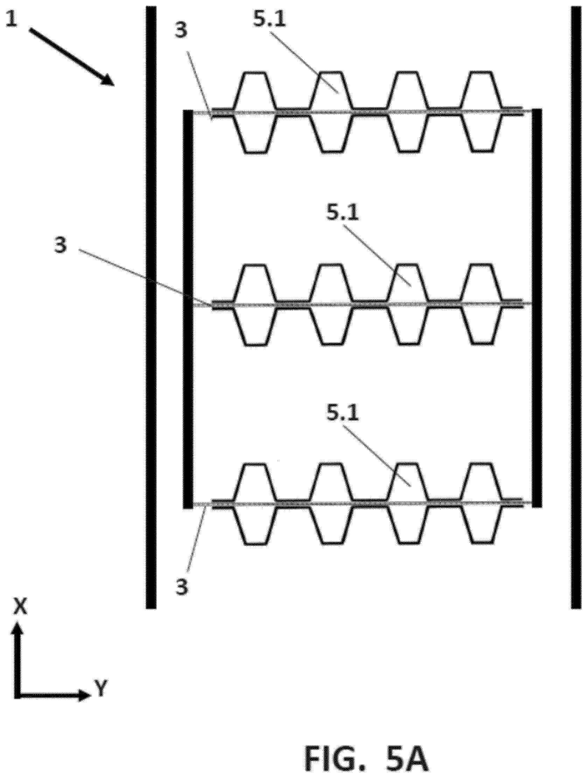

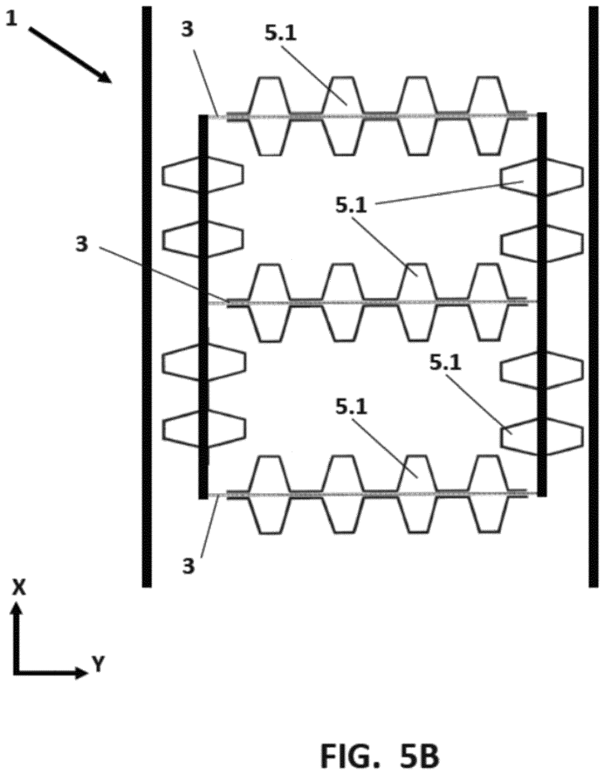

Figures 5A and 5B depict two embodiments of an aircraft fuselage section (1) according to the invention. In these figures, three additional frames (3) are shown and a plurality of crash absorption means arranged within the gap between the additional frame (3) and the structural frame (not shown in these figures).

In the embodiment of figure 5A, the crash absorption means are corrugated metal sheets (5.1) extending along the plane YZ perpendicular to the longitudinal direction X.

In the embodiment of figure 5B, the crash absorption means are corrugated metal sheets (5.1) extending along both the plane YZ perpendicular to the longitudinal direction and the longitudinal direction X. In this particular embodiment, the corrugated metal sheets (5.1) also extend in the space between successive pairs of frames, that is the additional frame (3) and the structural frame (not shown). Said space and gaps filled with more crash absorption means enhance the crash absorption capacities of the invention.

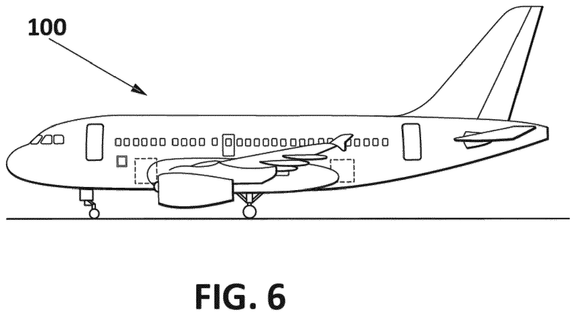

Figure 6 depicts an embodiment of an aircraft comprising any embodiment of the aircraft fuselage section (1) of the present invention.

## Claims

1. An aircraft fuselage section (1) extending along a longitudinal direction (X), the aircraft fuselage section (1) comprising at least one structural frame (2) and further comprising at least one additional frame (3);
wherein each additional frame (3) is attached to a corresponding structural frame (2) by means of at least two attaching means (4.1, 4.2);
wherein the additional frame (3) and the corresponding structural frame (2) are arranged at a same position according to the longitudinal direction (X);
wherein the additional frame (3) and the corresponding structural frame (2) are configured for defining a gap therebetween;
wherein the gap extends in a plane (YZ) perpendicular to the longitudinal direction (X); and
wherein the structural frame (2) and/or the corresponding additional frame (3) is/are configured to deform during a crash event.

2. The aircraft fuselage section (1) according to the preceding claim, wherein the frame (2, 3) located outermost the aircraft fuselage section is configured to deform during a crash event.

3. The aircraft fuselage section (1) according to any of the preceding claims further comprising crash absorption means (5) arranged between the structural frame (2) and the additional frame (3).

4. The aircraft fuselage section (1) according to the preceding claim, wherein the crash absorption means (5) are arranged along the longitudinal direction (X).

5. The aircraft fuselage section (1) according to claim 3 or 4, wherein the crash absorption means (5) comprise rod-posts, truss, corrugated metal sheets and/or lattice-work.

6. The aircraft fuselage section (1) according to the preceding claim, wherein the crash absorption means (5) are corrugated metal sheets and said crash absorption means (5) extend
- along the plane (YZ) perpendicular to the longitudinal direction (X), or
- along both the plane (YZ) perpendicular to the longitudinal direction (X) and the longitudinal direction (X).

7. The aircraft fuselage section (1) according to any of the preceding claims, wherein the additional frame (3) is arranged outwardly with respect to the structural frame (2).

8. The aircraft fuselage section (1) according to any of claims 1 to 6, wherein the additional frame (3) is arranged inwardly with respect to the structural frame (2).

9. The aircraft fuselage section (1) according to claim 7 or 8 further comprising a floor (6) connected to the innermost frame (2, 3).

10. The aircraft fuselage section (1) according to the preceding claim, wherein the floor (6) is curved.

11. The aircraft fuselage section (1) according to any of claims 9 or 10, wherein the floor (6) comprises two external layers (6.1, 6.2) and a filling layer (6.3) arranged between the two external layers (6.1, 6.2).

12. The aircraft fuselage section (1) according to any of the preceding claims, wherein the attaching means (4.1, 4.2) are configured for:
- allowing deformation of the additional frame (3) with respect to the structural frame (2) in the plane perpendicular to the longitudinal direction X, and/or
- allowing rotation of the additional frame (3) with respect to the structural frame (2), or
- fixing the additional frame (3) to the structural frame (2) so that the additional frame (3) has zero degree of freedom with respect to the structural frame (2).

13. The aircraft fuselage section (1) according to any of the preceding claims, further comprising at least one fuel storage tank (11), wherein, in operative mode, the at least one fuel storage tank (11) is arranged over one or more of the at least one additional frame (3).

14. An aircraft (100) comprising an aircraft fuselage section (1) according to any of the previous claims.
